# EUROPEAN PATENT SPECIFICATION

(11) **EP 2 284 930 B1**
(45) Date of publication and mention of the grant of the patent: **13.03.2013**
(21) Application number: 10172474.8
(22) Date of filing: 11.08.2010
(51) Int. Cl.: H01M 2/20, H01M 10/04, B23K 11/11, H01M 2/26

(54) **Secondary battery**
Sekundärbatterie
Batterie secondaire

(30) Priority: 14.08.2009 US 233935 P; 07.06.2010 US 795006
(43) Date of publication of application: 16.02.2011
(73) Proprietor: Samsung SDI Co., Ltd., Gyeonggi-do (KR)
(72) Inventor: Moon, Deayon, Gyeonggi-do (KR)
(74) Representative: Walaski, Jan Filip

(56) References cited:
- FR-A1- 2 869 463
- JP-A- 2004 273 221
- US-A1- 2006 032 667
- US-A1- 2006 159 987
- US-A1- 2007 207 377

## Description

The present invention relates to a secondary battery, particularly but not exclusively to a structure in which at least two rechargeable cells are connected to each other.

In the present invention, two secondary cells may be electrically connected to each other. The two secondary cells are laminated in the vertical direction and are electrically connected to a protective circuit module to form a battery pack.

As such, when a plurality of secondary cells are laminated to be electrically connected to each other, the connection is mainly performed by spot welding. Spot welding will be described briefly as follows.

Spot welding is a type of resistance welding mainly used to weld metal members. The principle is that members to be welded are melted and welded by Joule heat generated when current flows through the members for a short time. Spot welding is classified into a single phase AC series method and a DC direct method. In the direct method, two members to be welded are brought into surface contact with each other and two welding rods contact rear sides of the members to face each other, and electric current is applied thereto to perform welding. In the series method, when two members to be welded are brought into surface contact with each other and two welding rods contact a side of one of the members in parallel, electric current is applied to perform welding. Direct spot welding is used when welding space is guaranteed at both sides of the members to be welded. Series spot welding is used when welding space is not provided at both sides of the members to be welded.

In general, series spot welding is performed during the manufacturing of a secondary battery. Since, in series spot welding, two welding rods may be parallel and in close proximity to each other, workability is enhanced and welding may be easily performed even in a narrow space. However, in series spot welding, when a welding length is increased due to a thick material to be welded, a welding force decreases.

In a secondary battery, an electrode assembly is made by laminating a positive electrode, a separator, and a negative electrode, or winding a lamination thereof, positive and negative electrode tabs are coupled to the positive electrode and the negative electrode of the electrode assembly respectively, and accommodated in a case. This state is referred to as a "bare cell." The case is classified into a cylinder can type case, a polygonal can type case, and a pouch type case in which a plurality of thin films is laminated.

The bare cell is connected to a protective, or protection, circuit module (PCM) that controls a charging voltage and a discharging voltage of a battery. That is, the bare cell is electrically connected to the PCM to form a battery pack. The positive electrode tab and the negative electrode tab which protrude from the case are electrically connected to the PCM. In this case, the positive electrode tab and the negative electrode tab of the bare cell are connected to connection tabs protruding from the PCM. The electrode tabs and the connection tabs of the bare cell are welded to each other by resistance welding or ultrasonic welding. Since ultrasonic welding is complicated and its installation is expensive, spot welding is mainly applied to welding between the metal tabs.

FR 2 869 463 A1 discloses a batteries assembly in which multiple flat batteries configured with electrode tabs are stacked. The electrode tabs of the respective batteries are electrically connected by inserting the tabs through holes formed in a connection plate and then soldering the tabs to the connection plate.

According to the invention, there is provided a secondary battery comprising first and second bare cells arranged in the form of a stack, each of the bare cells comprising an electrode assembly and positive and negative electrode tabs extending from the electrode assembly and a connector for connecting the positive electrode tabs (B+) of the first and second bare cells together and for connecting the negative electrode tabs (B-) of the first and second bare cells together, the connector being arranged between the electrode tabs of the first bare cell and the electrode tabs of the second bare cell, wherein the electrode tabs of the first bare cell are welded to a first side of the connector and the electrode tabs of the second bare cell are welded to a second side of the connector that is opposite the first side, and wherein the connector (300) comprises a stacked structure.

The connector may comprise first and second connection elements, wherein the positive electrode tabs (B+) of the first and second bare cells are welded to opposite ends of the first connection element and the negative electrode tabs (B-) of the first and second bare cells are welded to opposite ends of the second connection element.

The connector may comprise first and second connection plates having an insulating layer between them, the first and second connection plates being electrically connected to one another, the positive electrode tab (B+) of the first bare cell being welded to the first plate and the positive electrode tab (B+) of the second bare cell being welded to the second plate and the connector further comprising third and fourth connection plates having an insulating layer between them, the third and fourth connection plates being electrically connected to one another, the negative electrode tab (B-) of the first bare cell being welded to the third plate and the negative electrode tab (B-) of the second bare cell being welded to the fourth plate.

An insulating layer may be arranged on surfaces of the first and second connection elements such that, when the connector is folded, the insulating layer divides the connection elements into upper and lower connection layers.

Portions of the connector connecting the positive electrodes together are joined to portions of the connector connecting the negative electrodes together by an insulating element.

The connector may comprise first and second electrode leads for connecting the first and second bare cells to a protection circuit module PCM. The connector may comprise a fold line about which the connector is foldable.

The secondary battery may further comprise a first binding layer for binding a first end of the connector and a second binding layer for binding a second end of the connector opposite the first end.

A battery pack may be formed by a secondary battery and a protection circuit module having PCM electrode leads welded to respective first and second electrode leads of the connector.

A method of making the secondary battery may comprise arranging the connector between the first and second bare cells, spot welding the positive and negative electrode tabs of the first bare cell to one side of the connector and spot welding the positive and negative electrode tabs of the second bare cell to the other side of the connector.

The method may comprise folding the connector after the steps of spot welding so that the first and second bare cells are stacked on top of one another. The method may comprise arranging the first and second bare cells in a stacked arrangement, arranging the connector between the first and second bare cells and then performing the steps of spot welding. The connector may be folded before arranging the connector between the first and second bare cells.

In embodiments of the present invention, a single connection tab may be used to electrically connect two bare cells to a protective circuit module, or two connection tabs may be used to electrically connect two bare cells to a protective circuit module.

The objects, features and advantages of the present invention will be more apparent from the following detailed description in conjunction with the accompanying drawings, in which:
FIG. 1 is a perspective view illustrating a secondary battery in which two bare cells are connected to each other according to an embodiment of the present invention;
FIG. 2 is a plan view illustrating the secondary battery of FIG. 1;
FIG. 3A is a sectional view taken along the line 3A-3A of FIG. 2;
FIG. 3B is a sectional view taken along the line 3B-3B of FIG. 2;
FIG. 4 is a perspective view illustrating the secondary battery in which laminated bare cells are connected to a protective circuit module, according to an embodiment of the present invention;
FIGS. 5A and 5B are schematic views illustrating a welding state between an electrode tab and a connection tab of the secondary battery according to an embodiment of the present invention;
FIGS. 5C and 5D are schematic views illustrating a welding state between an electrode tab and a connection tab of a secondary battery according to another embodiment of the present invention;
FIGS. 6A, 6B and 6C are schematic views illustrating welding between an electrode tab and a connection tab of a secondary battery according to still another embodiment of the present invention; and
FIGS. 7A to 7E are perspective views sequentially illustrating the process of welding an electrode tab to two connection tabs.

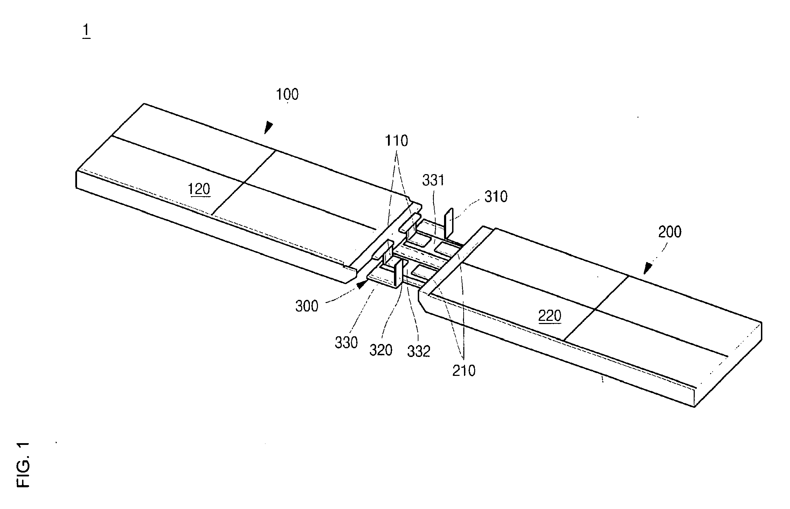

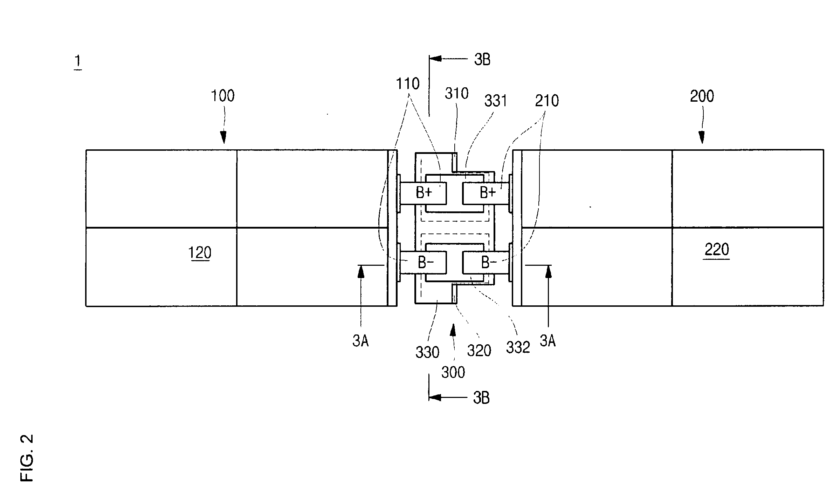

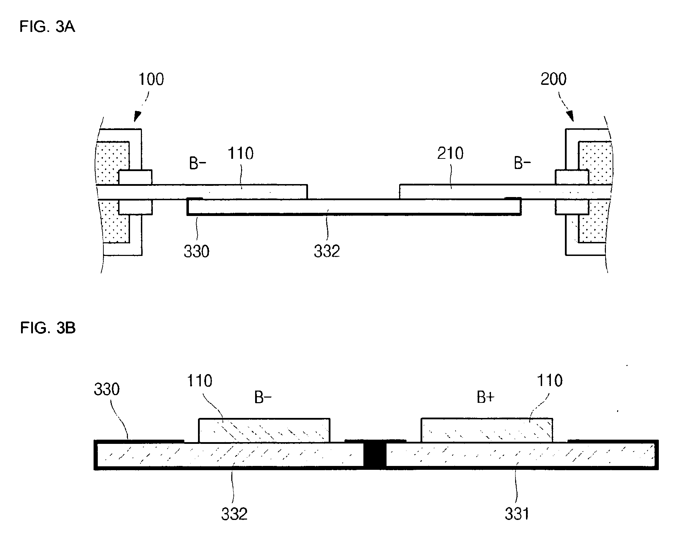

FIGS. 1 to 4 are views illustrating a secondary battery according to an embodiment of the present invention.

In a secondary battery according to an embodiment of the present invention, electrode tabs of two bare cells are electrically connected to each other through a single connection tab. When the connection tab is folded, the two bare cells are laminated in the vertical direction.

A secondary battery according to an embodiment of the present invention includes first and second bare cells 100 and 200, an electrode tab 110 having a positive electrode tab and a negative electrode tab that respectively protrude from a positive electrode plate (not shown) and a negative electrode plate (not shown) of the first bare cell 100, an electrode tab 210 having a positive electrode tab and a negative electrode tab of the second bare cell 200, and a connector 300 to which the electrode tabs 110 and 210 are electrically connected by welding.

The first and second bare cells 100 and 200 are bare cells of a pouch type secondary battery respectively having aluminum cases 120 and 220, but the cases 120 and 220 are not limited to the pouch type. The cases 120 and 220 accommodate electrode assemblies (not shown) in each of which a positive electrode, a separator, and a negative electrode are wound or laminated. In the electrode assemblies, the electrode tabs 110 and 210 are electrically connected to the positive electrode and the negative electrode respectively.

The electrode tabs 110 and 210 are partially attached to the positive electrode and the negative electrode and protrude out of the cases 120 and 220. Positive electrode tabs B+ and negative electrode tabs B- of the first and second bare cells 100 and 200 are connected to each other through the connector 300.

The connector 300 includes a positive electrode connection tab 331, also referred to as a first connection element, to which the positive electrode tabs B+ of the electrode tabs 110 and 210 are welded and a negative electrode connection tab 332, also referred to as a second connection element, to which the negative electrode tabs B- of the electrode tabs 110 and 210 are welded.

The positive electrode connection tab 331 or the negative electrode connection tab 332 may be made of nickel or nickel alloy, but the material is not limited thereto. A positive electrode lead 310 is provided in the positive electrode connection tab 331 and a negative electrode lead 320 is provided in the negative electrode connection tab 332. The positive electrode connection tab 331 and the negative electrode connection tab 332 are electrically connected to electrode leads 410 and 420 of a protective circuit module (PCM) 400, respectively.

The connector 300 includes a cover lay, or insulating layer, 330 being electrically insulated and connecting the positive electrode connection tab 331 to the negative electrode connection tab 332. The cover lay 330 surrounds outer surfaces of the positive electrode connection tab 331 and the negative electrode connection tab 332, but may be not formed on regions of the positive and negative electrode connection tabs 331 and 332 to which the electrode tabs 110 and 210 are connected. The positive electrode connection tab 331 and the negative electrode connection tab 332 are partially exposed to the outside of the cover lay 330 and are connected to the electrode tabs 110 and 210.

A manufacturing method of the secondary battery 1 according to the embodiment of the present invention will be described as follows.

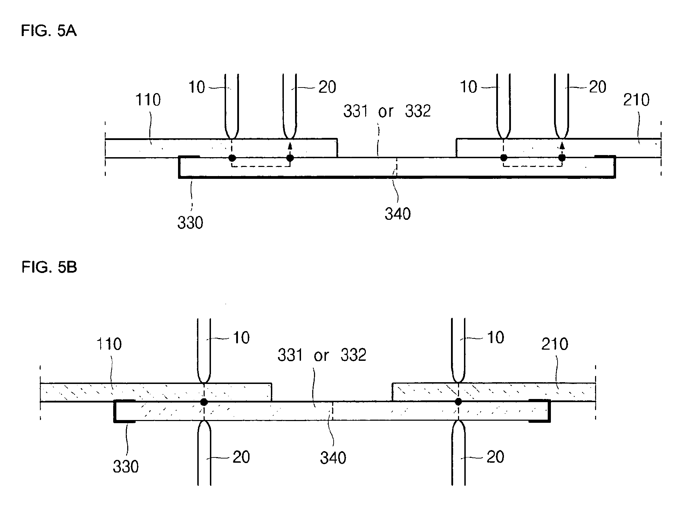

As illustrated in FIG. 5A, the positive electrode tab B+ and the negative electrode tab B- of the electrode tabs 110 and 210 of the first and second bare cells 100 and 200 are spot-welded to the positive electrode tab 331 and the negative electrode tab 332 of the connector 300. In this case, since the lower side of the connector is surrounded with the cover lay 330, the series spot welding is performed by two welding rods 10 and 20. Moreover, as illustrated in FIG. 5B, the positive electrode tab B+ and the negative electrode tab B- of the electrode tabs 110 and 210 of the first and second bare cells 100 and 200 are welded to the positive electrode tab 331 and the negative electrode tab 332 of the connector 300 in the direct spot welding method. In this case, since the cover lay 330 does not surround the lower side of the connector 300, an insulator (not shown) may be attached to the connector 300 when the connector 300 is folded.

Next, the second bare cell 200 is laminated on the first bare cell 100. That is, the second bare cell 200 is folded by 180 degrees along the center line of the connector 300. Thus, the first and second bare cells 100 and 200 are laminated in the vertical direction. The first bare cell 100 and the second bare cell 200 are laminated in the vertical direction.

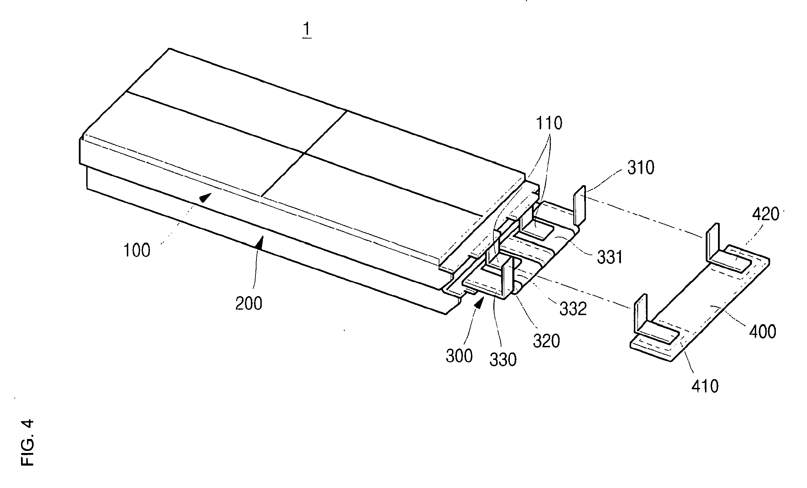

As illustrated in FIG. 4, the electrode leads 310 and 320 of the positive and negative electrode connection tabs 331 and 332 of the connector 300 are welded to the electrode leads 410 and 420 the PCM 400. Thus, when the first and second bare cells 100 and 200 are laminated, the first and second bare cells 100 and 200 are electrically connected to the PCM 400 through the connector 300. As such, a battery pack is completed when the first and second laminated bare cells 100 and 200 are connected to the PCM 400.

The first and second laminate bare cells 100 and 200 are controlled to discharge or to be charged by a single PCM 400. As such, the battery exhibits high voltage and high output and exhibits high capacity when the two laminated bare cells 100 and 200 are electrically connected to each other.

The connector 300 may have fold line 340 formed in the center thereof. The fold line 340 enables the connector 300 to be folded at the same position and the folding of the connection to be easily performed.

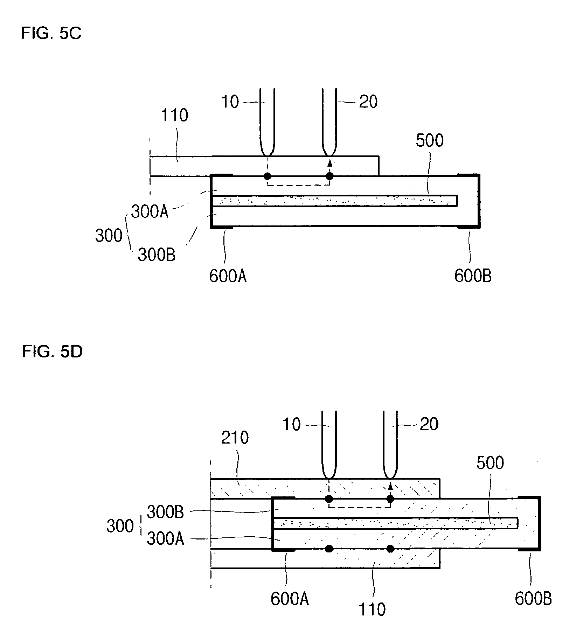

Next, a secondary battery according to another embodiment of the present invention will be described with reference to FIGS. 5C and 5D.

A secondary battery according to another embodiment of the present invention is identical to the secondary battery according to the above embodiment of the present invention in view that two bare cells are connected to a single connector and the two bare cells are laminated in the vertical direction.

In the secondary battery according to the embodiment of the present invention, the connector is folded after the electrode tabs are welded to the connector. On the contrary, in the secondary battery according to another embodiment of the present invention, the connector is folded before the electrode tabs are welded to the connector. Thus, the first and second bare cells are laminated in the vertical direction when the electrode tabs are welded.

The secondary battery according to another embodiment of the present invention includes first and second laminated bare cells 100 and 200, electrode tabs 110 and 210 having positive and negative electrode tabs respectively withdrawn from positive and negative electrode tabs of the first and second bare cells 100 and 200, the connector 300 welded to the electrode tabs 110 and 210, and an insulator 500 partially attached to a surface of the connector 300.

As described above, the first and second bare cells 100 and 200 and the first and second electrode tabs 110 and 210 having the positive and negative electrode tabs withdrawn from the first and second bare cells 100 and 200 of the secondary battery according to another embodiment of the present invention are the same as those of the secondary battery according to the above embodiment of the present invention. Thus, same reference numerals are assigned to same components and their drawings and descriptions will be omitted.

In the secondary battery according to another embodiment of the present invention, the connector 300 is folded approximately along the center line before the two electrode tabs 110 and 210 are welded to the connector 300.

When the connector 300 is folded, the connector 300 is welded to the electrode tabs 110 and 220 of the first and second bare cells 100 and 200. Thus, the first and second bare cells 100 and 200 are electrically connected to each other and are laminated in the vertical direction.

A manufacturing method of the secondary battery according to another embodiment of the present invention will be described as follows.

Referring to FIG. 5C, in the secondary battery according to another embodiment of the present invention, the insulator 500 may be formed on a surface of the connector 300 having a positive electrode connection tab 331 and a negative electrode connection tab 332. Any material used for electric insulation may be used as the insulator 500. Polyimide resin may be mainly used as the electric insulator but is not limited thereto.

The insulator 500 formed on a surface of the connector 300 is positioned inside the connector 300 when the connector 300 is folded. Thus, the connector 300 may be divided into a top connection tab 300A and a bottom connection tab 300B by the insulator 500 inserted therebetween. The top and bottom connection tabs 300A, 300B are also referred to herein as upper and lower connection layers.

An end of the connector 300 is fixed by a cover lay 600A, also referred to as a first binding layer. The connector 300 may further include a cover lay 600B, also referred to as a second binding layer, surrounding an opposite end where the top connection tab 300A and the bottom connection tab 300B are connected to each other. The top and bottom connection tabs 300A and 300B maintain the parallel state due to the cover lay 600A or the cover lay 600B. Thus, the insulator 500 which is inserted into the connector 300 is prevented from being released out of the connector 300. The cover lays 600A and 600B may be made of insulator. The insulator 500 and the cover lays 600A and 600B may be made of same material, but are not limited thereto.

FIG. 5C illustrates spot welding between the connector 300 and the electrode tab 110 of the first bare cell 100. Welding between the connector 300 and the electrode tab 110 is performed in the series spot welding in which electric current is applied to perform welding between the connector 300 and the electrode tab 110 when the electrode tab 110 is seated on the top connection tab 300A of the connector 300 and two welding rods 10 and 20 are arranged in parallel.

FIG. 5D shows the series spot welding of the electrode tab 210 of the second bare cell 200 when the connector 300 as illustrated in FIG. 5C is turned over by 180 degrees. The electrode tab 210 is welded to the connector 300 by applying electric current to two welding rods 10 and 20 when the electrode tab 210 of the second bare cell 200 is seated on the bottom connection tab 300B of the connector 300.

As such, the electrode tab 110 of the first bare cell 100 is welded to the top connection tab 300A and the electrode tab 210 of the second bare cell 200 is welded to the bottom connection tab 300B. Thus, the first and second bare cells 100 and 200 are electrically connected to the top and bottom surfaces of the connector 300. The first and second bare cells 100 and 200 are laminated in the vertical direction.

Next, a secondary battery according to still another embodiment of the present invention will be described.

In the secondary battery according to still another embodiment of the present invention, electrode tabs of two bare cells are respectively connected to each other by two plates of a connector which are laminated in the vertical direction. The secondary battery according to still another embodiment of the present invention is different from the secondary battery according to the embodiment of the present invention in view that electrode tabs of first and second laminated bare cells are electrically connected to the two laminated plates respectively.

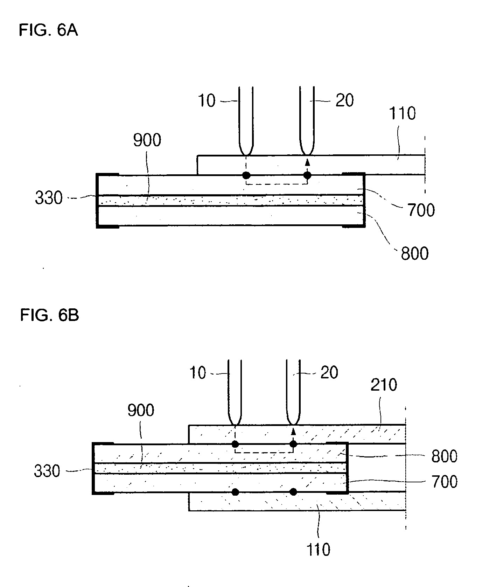

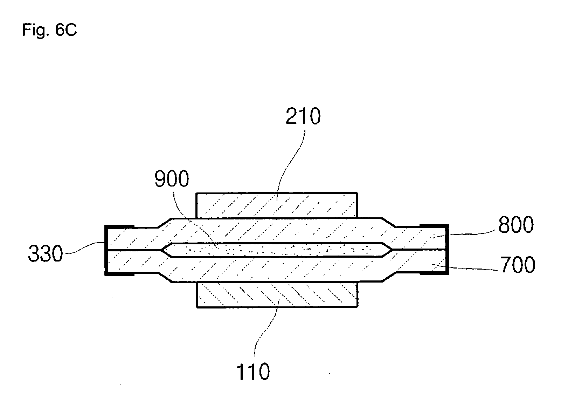

A secondary battery according to still another embodiment of the present invention, as illustrated in FIGS. 6A, 6B and 6C, includes first and second bare cells 100 and 200, first and second electrode tabs 110 and 210 having positive and negative electrode tabs respectively withdrawn from positive and negative electrodes of the first and second bare cells 100 and 200, two connection tabs 700 and 800 welded to the electrode tabs 110 and 210, and an insulator 900 inserted between the two connection tabs 700 and 800. The connection tabs 700, 800 are also referred to as first and second connection plates.

The secondary battery according to still another embodiment of the present invention is identical to the secondary battery according to the embodiment of the present invention in view of the first and second bare cells 100 and 200 and the first and second electrode tabs 110 and 210 having the positive and negative electrode tabs withdrawn from the first and second bare cells 100 and 200. Thus, same reference numerals are assigned to same components and their drawings and descriptions will be omitted.

The connection tabs 700 and 800 are approximately identical to the above-mentioned connector 300. Outer surfaces of the connection tabs 700 and 800 are surrounded by a cover lay 330 made of a protection film. The cover lay 330 may be not formed on regions of the connection tabs 700 and 800 to which the electrode tabs 110 and 210 are welded.

The insulator 900 is disposed between the connection tabs 700 and 800 and has a size corresponding to that of the connection tabs 700 and 800. Any material used for electric insulation and an equivalent may be used as the insulator 900.
In the secondary battery according to still another embodiment of the present invention, the electrode tabs 110 and 210 of the first and second bare cells 100 and 200 are welded to the first and second connection tabs 700 and 800, respectively. Thus, in comparison to a case of welding the electrode tabs 110 and 210 to a single connection tab, the folding of the connection tab may be canceled.

In the still another embodiment, the insulator 900 is disposed between the first connection tab 700 and the second connection tab 800 and the series spot welding is performed.

A manufacturing method of the secondary battery according to still another embodiment of the present invention will be described.

Referring to FIG. 6A, the electrode tab 110 of the first bare cell 100 is connected to the first connection tab 700. That is, spot welding is performed with two welding rods 10 and 20 in the series welding method. The first electrode tab 110 brings into surface contact with the first connection tab 700 and the first connection tab 700 and the second connection tab 800 are insulated from each other by the insulator 900. When electric current flows through the first electrode tab 110 and the first connection tab 700, the first electrode tab 110 is welded to the first connection tab 700. Thus, the welding length is short and maximal welding effect may be exhibited within a short time.

FIG. 6B shows the connection of the electrode tab 210 of the second bare cell 200 to the second connection tab 800. The connection performed by the series spot welding with two welding rods 10 and 20 is identical to the case as illustrated in FIG. 6A. In this case, the second electrode tab 210 brings into surface contact with the second connection tab 800 and the first connection tab 700 is insulated from the second connection tab 800 by the insulator 900. Thus, electric current applied through the two welding rods 10 and 20 passes through the second electrode tab 210 and the second connection tab 800 so that the welding is performed within the short welding length and time.

FIG. 6C shows the connection of the electrode tab 210 of the second bare cell 200 to the second connection tab 800. Further, the connection of the electrode tab 110 of the second bare cell 200 to the second connection tab 700 is also illustrated. An insulator 900 is provided between the connection tabs (700 and 800).

As described above, the electrode tab 110 of the first bare cell 100 and the electrode tab 210 of the second bare cell 200 are electrically connected and welded to the connection tabs 700 and 800. Thus, after the electrode tabs 110 and 210 are welded to the connection tabs 700 and 800, the first bare cell 100 and the second bare cell 200 are laminated in the vertical direction.

The first and second bare cells 100 and 200 are electrically connected to the PCM 400 through the two connection tabs 700 and 800, and finally form a battery pack. Next, a method of electrically welding two bare cells to two connection tabs according to still another embodiment of the present invention will be described in detail.

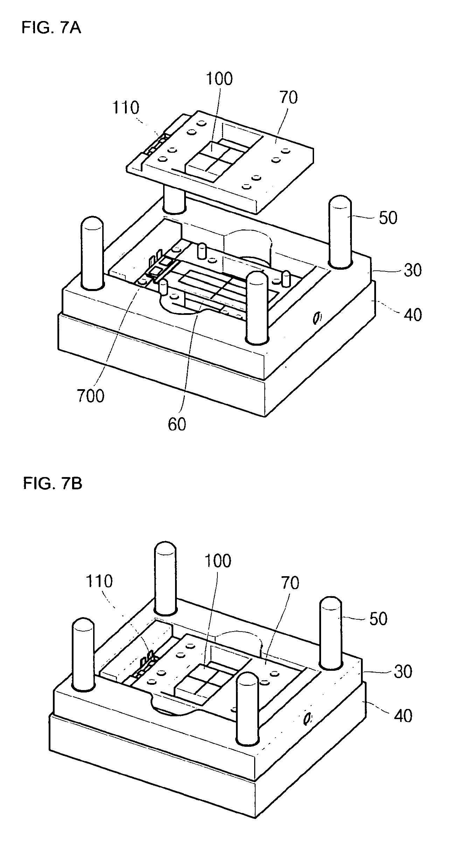

Referring to FIGS. 7A to 7E, an upper jig 30 and a lower jig 40 are installed to be spaced apart from each other by guide rods 50 provided at four corners. In the upper jig 30, a first jig 60, including the first and second connection tabs 700 and 800 and the insulator 900 disposed between the first and second connection tabs 700 and 800, is installed. The first jig 60 is installed such that the first connection tab 700 is exposed to the outside. When a second jig 70 on which the first bare cell 100 is mounted is positioned above the first jig 60, the first connection tab 700 on the first jig 60 faces the electrode tab 110 of the first bare cell 100 mounted on the second jig 70 (See FIG. 7A).

Thus, the first connection tab 700 and the electrode tab 110 of the first bare cell 100 may be welded in the series spot welding (See FIGS. 6A and 7B).

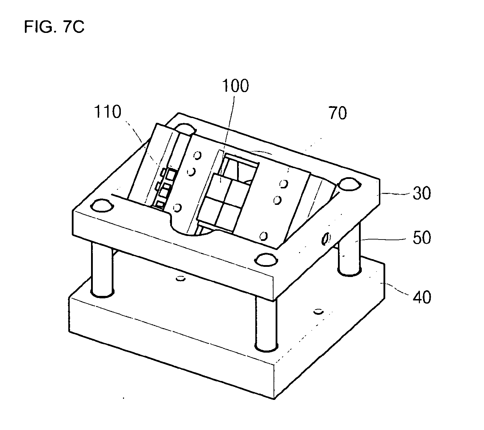

Next, the upper jig 30 is separated from the lower jig 40. At this time, the upper jig 30 is guided by the guide rods 50 and is spaced away from the lower jig 40. Then, the first and second jigs 60 and 70 are rotated by 180 degrees within the upper jig 30 (See FIG. 7C).

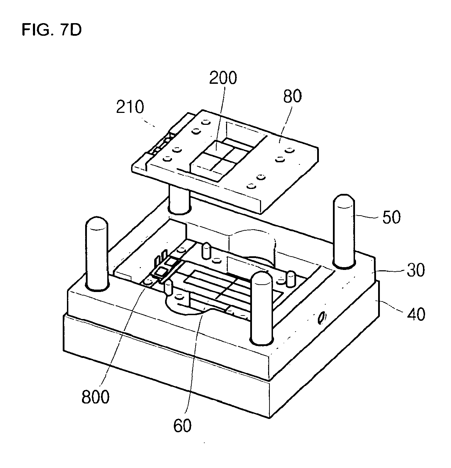

When the upper jig 30 is lowered to the lower jig 40, the second connection tab 800 on the first jig 60 is exposed to the outside (See FIG. 7D).

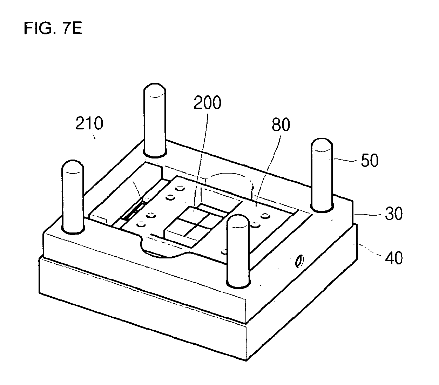

After that, a third jig 80 on which the second bare cell 200 is mounted is coupled to the upper side of the first jig 60 (See FIG. 7E).

Thus, the second connection tab 800 faces the electrode tab 210 of the second bare cell 200. By doing so, the second connection tab 800 and the electrode tab 210 of the second bare cell 200 may be welded to each other in the series spot welding (See FIG. 6B).

As described above, when the upper and lower jigs 30 and 40, the first jig 60 on which the first and second connection tabs 700 and 800 are mounted, the second jig 70 on which the first bare cell 100 is mounted, and the third jig 80 on which the second bare cell 200 is mounted are used, the welding between the electrode tabs and the connection tab may be easily and precisely performed.

Although exemplary embodiments of the present invention have been described in detail hereinabove, it should be understood that many variations and modifications of the basic inventive concept herein described will still fall within the scope of the the present invention as defined by the appended claims.

## Claims

1. A secondary battery (1) comprising:
first and second bare cells (100, 200) arranged in the form of a stack, each of the bare cells comprising an electrode assembly and positive and negative electrode tabs (110, 210) extending from the electrode assembly; and
a connector (300) for connecting the positive electrode tabs (B+) of the first and second bare cells together and for connecting the negative electrode tabs (B-) of the first and second bare cells together, the connector being arranged between the electrode tabs (110) of the first bare cell (100) and the electrode tabs (210) of the second bare cell (200), wherein the electrode tabs (110) of the first bare cell are welded to a first side of the connector (300) and the electrode tabs (210) of the second bare cell are welded to a second side of the connector (300) that is opposite the first side, wherein the connector (300) comprises a stacked structure.

2. A secondary battery according to claim 1, wherein the connector comprises first and second connection elements (331, 332), wherein:
the positive electrode tabs (B+) of the first and second bare cells are welded to opposite ends of the first connection element (331); and
the negative electrode tabs (B-) of the first and second bare cells are welded to opposite ends of the second connection element (332).

3. A secondary battery according to claim 1, wherein: the connector (300) comprises first and second connection plates (700, 800) having an insulating layer (900) between them, the first and second connection plates being electrically connected to one another, the positive electrode tab (B+) of the first bare cell (100) being welded to the first plate (700) and the positive electrode tab (B+) of the second bare cell (200) being welded to the second plate (800); and
the connector further comprises third and fourth connection plates (700, 800) having an insulating layer (900) between them, the third and fourth connection plates being electrically connected to one another, the negative electrode tab (B-) of the first bare cell (100) being welded to the third plate (700) and the negative electrode tab (B-) of the second bare cell (200) being welded to the fourth plate.

4. A secondary battery according to claim 2, further comprising an insulating layer (330, 500) arranged on surfaces of the first and second connection elements (331, 332) such that, when the connector is folded, the insulating layer divides the connection elements (331, 332) into upper and lower connection layers (300A, 300B).

5. A secondary battery according to any one of the preceding claims, wherein portions of the connector connecting the positive electrodes together are joined to portions of the connector connecting the negative electrodes together by an insulating element (330).

6. A secondary battery according to claim 5, wherein the connector (300) comprises first and second electrode leads (310, 320) for connecting the first and second bare cells to a protection circuit module PCM (400).

7. A secondary battery according to claim 5 or 6, wherein the connector (300) comprises a fold line (340) about which the connector is foldable.

8. A secondary battery according to any one of the preceding claims, further comprising a first binding layer (600A) for binding a first end of the connector.

9. A secondary battery according to claim 8, further comprising a second binding layer (600B) for binding a second end of the connector opposite the first end.

10. A battery pack comprising a secondary battery according to claim 6 and a protection circuit module (400) having PCM electrode leads (410, 420) welded to respective first and second electrode leads (310, 320) of the connector (300).

11. A method of manufacturing a secondary battery according to any one of claims 1 to 9, comprising:
arranging the connector between the first and second bare cells (100, 200),
spot welding the positive and negative electrode tabs (110) of the first bare cell to one side of the connector; and
spot welding the positive and negative electrode tabs (210) of the second bare cell to the other side of the connector.

12. A method according to claim 11, wherein the connector is foldable, the method comprising folding the connector (300) after the steps of spot welding so that the first and second bare cells (100, 200) are stacked on top of one another.

13. A method according to claim 11, comprising arranging the first and second bare cells in a stacked arrangement, arranging the connector between the first and second bare cells and then performing the steps of spot welding.

14. A method according to claim 13, wherein the connector is foldable, comprising folding the connector before arranging the connector between the first and second bare cells (100, 200).

## Patentansprüche

1. Sekundärbatterie (1), umfassend:
erste und zweite in Form eines Stapels angeordnete Rohzellen (100, 200), wobei jede der Rohzellen eine Elektrodenanordnung sowie positive und negative sich von der Elektrodenanordnung aus erstreckende Elektrodenlaschen (110, 210) umfasst; und
einen Verbinder (300) zum Verbinden der positiven Elektrodenlaschen (B+) der erste und zweiten Rohzellen miteinander sowie zum Verbinden der negativen Elektrodenlaschen (B-) der ersten und zweiten Rohzellen miteinander, wobei der Verbinder zwischen den Elektrodenlaschen (110) der ersten Rohzelle (100) und den Elektrodenlaschen (210) der zweiten Rohzelle (200) angeordnet ist, wobei die Elektrodenlaschen (110) der ersten Rohzelle mit einer ersten Seite des Verbinders (300) verschweißt sind und die Elektrodenlaschen (210) der zweiten Rohzelle mit einer zweiten Seite des Verbinders (300), die der ersten Seite gegenüberliegt, verschweißt sind, wobei der Verbinder (300) eine Stapelstruktur umfasst.

2. Sekundärbatterie nach Anspruch 1, wobei der Verbinder erste und zweite Verbindungselemente (331, 332) umfasst, wobei:
die positiven Elektrodenlaschen (B+) der ersten und zweiten Rohzellen mit gegenüberliegenden Enden des ersten Verbindungselements (331) verschweißt sind; und
die negativen Elektrodenlaschen (B-) der ersten und zweiten Rohzellen mit gegenüberliegenden Enden des zweiten Verbindungselements (332) verschweißt sind.

3. Sekundärbatterie nach Anspruch 1, wobei der Verbinder (300) erste und zweite Verbindungsplättchen (700, 800) mit einer dazwischenliegenden Isolierschicht (900) umfasst, wobei die ersten und zweiten Verbindungsplättchen elektrisch miteinander verbunden sind, die positive Elektrodenlasche (B+) der ersten Rohzelle (100) mit dem ersten Plättchen (700) verschweißt ist und die positive Elektrodenlasche (B+) der zweiten Rohzelle (200) mit dem zweiten Plättchen (800) verschweißt ist; und der Verbinder ferner dritte und vierte Verbindungsplättchen (700, 800) mit einer dazwischenliegenden Isolierschicht (900) umfasst, wobei die dritten und vierten Verbindungsplättchen elektrisch miteinander verbunden sind, die negative Elektrodenlasche (B-) der ersten Rohzelle (100) mit dem dritten Plättchen (700) verschweißt ist und die negative Elektrodenlasche (B-) der zweiten Rohzelle (200) mit dem vierten Plättchen verschweißt ist

4. Sekundärbatterie nach Anspruch 2, ferner umfassend eine Isolierschicht (330, 500), die derart auf Flächen der ersten und zweiten Verbindungselemente (331, 332) angeordnet ist, dass, wenn der Verbinder gefaltet wird, die Isolierschicht die Verbindungselemente (331, 332) in obere und untere Verbindungsschichten (300A, 300B) teilt.

5. Sekundärbatterie nach einem der vorstehenden Ansprüche, wobei Abschnitte des die positiven Elektroden miteinander verbindenden Verbinders mit Abschnitten des die negativen Elektroden miteinander verbindenden Verbinders durch ein Isolierelement (330) zusammengebracht werden.

6. Sekundärbatterie nach Anspruch 5, wobei der Verbinder (300) erste und zweite Elektrodenleitungen (310, 320) zum Verbinden der ersten und zweiten Rohzellen mit einem Schutzschaltungsmodul PCM (400) umfasst.

7. Sekundärbatterie nach Anspruch 5 oder 6, wobei der Verbinder (300) eine Faltlinie (340) umfasst, um welche der Verbinder faltbar ist.

8. Sekundärbatterie nach einem der vorstehenden Ansprüche, ferner umfassend eine erste Bindeschicht (600A) zum Einbinden eines ersten Endes des Verbinders.

9. Sekundärbatterie nach Anspruch 8, ferner umfassend eine zweite Bindeschicht (600B) zum Einbinden eines zweiten Endes des Verbinders gegenüber dem ersten Ende.

10. Batteriepack umfassend eine Sekundärbatterie nach Anspruch 6 sowie ein Schutzschaltungsmodul (400) mit PCM-Elektrodenleitungen (410, 420), die mit entsprechenden ersten und zweiten Elektrodenleitungen (310, 320) des Verbinders (300) verschweißt sind.

11. Verfahren zur Herstellung einer Sekundärbatterie nach einem der Ansprüche 1 bis 9, umfassend:
Anordnen des Verbinders zwischen den ersten und zweiten Rohzellen (100, 200), Punktverschweißen der positiven und negativen Elektrodenlaschen (110) der ersten Rohzelle mit einer Seite des Verbinders; und
Punktverschweißen der positiven und negativen Elektrodenlaschen (210) der zweiten Rohzelle mit der anderen Seite des Verbinders.

12. Verfahren nach Anspruch 11, wobei der Verbinder faltbar ist, wobei das Verfahren das Falten des Verbinders (300) nach den Schritten des Punktschweißens umfasst, so dass die ersten und zweiten Rohzellen (100, 200) übereinander gestapelt sind.

13. Verfahren nach Anspruch 11, umfassend das Anordnen der ersten und zweiten Rohzellen in einer Stapelanordnung, Anordnen des Verbinders zwischen den ersten und zweiten Rohzellen, und dann Durchführen der Schritte des Punktschweißens.

14. Verfahren nach Anspruch 13, wobei der Verbinder faltbar ist, umfassend das Falten des Verbinders vor dem Anordnen des Verbinders zwischen den ersten und zweiten Rohzellen (100, 200).

## Revendications

1. Batterie d'accumulateurs (1), comprenant :
des première et seconde cellules nues (100, 200) disposées sous forme d'un empilement, chacune des cellules nues comprenant un assemblage d'électrodes et des pattes d'électrodes positive et négative (110, 120) s'étendant à partir de l'assemblage d'électrodes ; et
un connecteur (300) pour connecter les pattes d'électrode positive (B+) des première et seconde cellules nues ensemble et pour connecter les pattes d'électrode négative (B-) des première et seconde cellules nues ensemble, le connecteur étant disposé entre les pattes d'électrodes (110) de la première cellule nue (100) et les pattes d'électrodes (210) de la seconde cellule nue (200), lesdites pattes d'électrodes (110) de la première cellule nue étant soudées à un premier côté du connecteur (300) et lesdites pattes d'électrodes (210) de la seconde cellule nue étant soudées à un second côté du connecteur (300) qui est opposé au premier côté, ledit connecteur (300) comprenant une structure empilée.

2. Batterie d'accumulateurs suivant la revendication 1, dans laquelle le connecteur comprend des premier et second éléments de connexion (331, 332), dans laquelle :
les pattes d'électrode positive (B+) des première et seconde cellules nues sont soudées aux extrémités opposées du premier élément de connexion (331) ; et
les pattes d'électrode négative (B-) des première et seconde cellules nues sont soudées aux extrémités opposées du second élément de connexion (332).

3. Batterie d'accumulateurs suivant la revendication 1, dans laquelle : le connecteur (300) comprend des première et deuxième plaques de connexion (700, 800) comportant entre elles une couche isolante (900), les première et deuxième plaques de connexion étant connectées électriquement l'une à l'autre, la patte d'électrode positive (B+) de la première cellule nue (100) étant soudée à la première plaque (700) et la patte d'électrode positive (B+) de la seconde cellule nue (200) étant soudée à la deuxième plaque (800) ; et
le connecteur comprend en outre des troisième et quatrième plaques de connexion (700, 800) comportant entre elles une couche isolante (900), les troisième et quatrième plaques de connexion étant connectées électriquement l'une à l'autre, la patte d'électrode négative (B-) de la première cellule nue (100) étant soudée à la troisième plaque (700) et la patte d'électrode négative (B-) de la seconde cellule nue (200) étant soudée à la quatrième plaque.

4. Batterie d'accumulateurs suivant la revendication 2, comprenant en outre une couche isolante (330, 500) disposée sur des surfaces des premier et second éléments de connexion (331, 332) de telle sorte que, lorsque le connecteur est plié, la couche isolante divise les éléments de connexion (331, 332) en des couches de connexion supérieure et inférieure (300A, 300B).

5. Batterie d'accumulateurs suivant l'une quelconque des revendications précédentes, dans laquelle des portions du connecteur connectant les électrodes positives ensemble sont jointes aux portions du connecteur connectant les électrodes négatives ensemble par un élément isolant (330).

6. Batterie d'accumulateurs suivant la revendication 5, dans laquelle le connecteur (300) comprend des premier et second conducteurs d'électrodes (310, 320) pour connecter les première et seconde cellules nues à un module de circuit de protection PCM (400).

7. Batterie d'accumulateurs suivant la revendication 5 ou 6, dans laquelle le connecteur (300) comprend une ligne de pliage (340) de part et d'autre de laquelle le connecteur peut être plié.

8. Batterie d'accumulateurs suivant l'une quelconque des revendications précédentes, comprenant en outre une première couche de liaison (600A) pour lier une première extrémité du connecteur.

9. Batterie d'accumulateurs suivant la revendication 8, comprenant en outre une seconde couche de liaison (600B) pour lier une seconde extrémité du connecteur opposée à la première extrémité.

10. Batterie d'alimentation, comprenant une batterie d'accumulateurs suivant la revendication 6 et un module de circuit de protection (400) comportant des conducteurs d'électrodes de PCM (410, 420) soudés aux premier et second conducteurs d'électrodes respectifs (310, 320) du connecteur (300).

11. Procédé pour produire une batterie d'accumulateurs suivant l'une quelconque des revendications 1 à 9, comprenant :
la mise en place du connecteur entre les première et seconde cellules nues (100, 200),
le soudage par points des pattes d'électrodes positive et négative (110) de la première cellule nue à un côté du connecteur ; et
le soudage par points des pattes d'électrodes positive et négative (210) de la seconde cellule nue à l'autre côté du connecteur.

12. Procédé suivant la revendication 11, dans lequel le connecteur est pliable, le procédé comprenant le pliage du connecteur (300) après les étapes de soudage par points de telle sorte que les première et seconde cellules nues (100, 200) soient empilées l'une sur l'autre.

13. Procédé suivant la revendication 11, comprenant la mise en place des première et seconde cellules nues suivant une disposition empilée, la mise en place du connecteur entre les première et seconde cellules nues et ensuite la mise en oeuvre des étapes de soudage par points.

14. Procédé suivant la revendication 13, dans lequel le connecteur est pliable, comprenant le pliage du connecteur avant la mise en place du connecteur entre les première et seconde cellules nues (100, 200).
